# EUROPEAN PATENT SPECIFICATION

(11) **EP 1 331 371 B1**
(45) Date of publication and mention of the grant of the patent: **09.08.2006**
(21) Application number: 01974839.1
(22) Date of filing: 12.10.2001
(51) Int. Cl.: F01N 3/02, F02D 41/02, F02D 21/08

(54) **EXHAUST EMISSION CONTROL DEVICE OF INTERNAL COMBUSTION ENGINE**
KONTROLLVORRICHTUNG FÜR ABGASEMISSIONEN EINER BRENNKRAFTMASCHINE
DISPOSITIF DE CONTROLE DES EMISSIONS D'ECHAPPEMENT D'UN MOTEUR A COMBUSTION INTERNE

(30) Priority: 13.10.2000 JP 2000314048
(43) Date of publication of application: 30.07.2003
(73) Proprietor: Toyota Jidosha Kabushiki Kaisha, Toyota-shi, Aichi 471-8571 (JP)
(72) Inventor: ONO, Tomoyuki, C/O TOYOTA JIDOSHA KABUSHIKI KAISHA, Toyota-shi, Aichi 471-8571 (JP)
(74) Representative: TBK-Patent
(86) International application number: PCT/JP2001/009012
(87) International publication number: WO 2002/031324

(56) References cited:
- DE-A1- 4 234 841
- DE-A1- 4 330 830
- JP-A- 8 105 315
- JP-A- 2000 170 520
- JP-U- 3 041 112
- US-A- 4 756 155
- US-A- 5 287 698

## Description

### TECHNICAL FIELD

The present invention relates to a device for purifying the exhaust gas of an internal combustion engine.

### BACKGROUND ART

The exhaust gas of an internal combustion engine and, particularly, of a diesel engine, contains particulates comprising carbon as a chief component, and it has been desired to lower the amount of particulates emitted into the atmosphere. It has therefore been proposed to dispose a particulate filter in the exhaust system of the diesel engine as a filter for trapping the particulates. Such a particulate filter may become a large resistance against the exhaust gas as the amount of trapped particulates increases. It therefore becomes necessary to regenerate the particulate filter itself by burning the trapped particulates.

When the exhaust gas temperature becomes high in high-engine-load and high-engine-speed operating conditions, and the like, the trapped particulates ignite spontaneously and the particulate filter can be regenerated. However, there is no guarantee that the high-engine-load and high-engine-speed operating conditions frequently occur. Generally, therefore, the regeneration treatment is executed by arranging a heater or oxidation catalyst in the particulate filter and energizing the heater or supplying unburned fuel into the oxidation catalyst to cause regeneration.

It therefore becomes necessary to determine the timing for regenerating the particulate filter. When the determined timing for regeneration is too early, the regeneration treatment is executed unnecessarily causing a problem that the battery must be large or a large amount of fuel is consumed. When the determined timing for regeneration is too late, on the other hand, the resistance against the exhaust gas greatly increases in the engine exhaust system causing a large drop in the engine output.

It is therefore desired to correctly determine the timing for regenerating the particulate filter. It has, for example, been proposed to determine the timing for regeneration on the basis of the fact that an amount of trapped particulates increases with an increase in the distance that the vehicle has traveled. However, a distinct difference occurs in the amount of trapped particulates depending upon the operating conditions over the predetermined distance that the vehicle has traveled. With this method, therefore, it is not possible to correctly determine the timing for regeneration.

Further, it has been proposed that pressure sensors are arranged upstream and downstream of the particulate filter and the timing for regeneration is determined on the basis of the fact that a difference between the pressures detected by these pressure sensors increases with an increase in the amount of trapped particulates. However, a pressure sensor is expensive and can itself become a relatively large resistance against the exhaust gas, and thus this method is not preferable.

To determine the timing for regenerating the particulate filter cheaply and relative correctly, Japanese Unexamined Utility Model Publication No. 3-41112 proposes determination of the timing for regenerating the particulate filter by comparing the amount of measured fresh air with a reference value for every engine operating condition on the basis of the fact that the amount of the fresh intake air decreases with an increase in the amount of trapped particulates.

In such a determination of the timing for regenerating the particulate filter on the basis of an amount of fresh intake air, it is important that the amount of fresh intake air is stable. Steady engine operating conditions are suitable for this determination. However, steady engine operations may not be carried out for a long time while traveling in urban areas, and thus a determination interval may become long. Therefore, when a large amount of particulates is trapped on the particulate filter, this method may not be able to determine the timing for the regeneration.

When the accelerator pedal is released to cause deceleration and a fuel-cut is carried out, the amount of intake air is stable. A fuel-cut is frequently carried out while traveling in urban areas and this is suitable for the determination of the timing for regeneration. However, when a fuel-cut is carried out, the absolute amount of intake air is small and thus the reference value itself becomes small. Therefore, it is difficult to determine the timing for regeneration correctly if a measurement error is taken into consideration.

If a throttle valve in which an opening degree can be set freely in spite of a depressed amount of the accelerator pedal is used, an amount of intake air can be increased without a problem when a fuel-cut is carried out. Namely, when a fuel-cut is carried out, the throttle valve is opened fully or to a relative large opening degree and thus the amount of to intake air can be increased. Therefore, the timing for regeneration can be determined correctly on the basis of the large amount of fresh intake air.

However, for example, when something is wrong with the fuel injection system or the like, an engine output larger than the intended one can be produced. In such a case, where a high engine output is abnormally produced, if the throttle valve is controlled as the above-mentioned, when a driver releases the accelerator pedal for a deceleration of the vehicle, the throttle valve is opened on the basis of the fuel-cut order and thus the abnormally increased engine output cannot be decreased favorably.

US 5287698 shows a regeneration system for a particle filter in an exhaust system of an internal combustion engine.

### DISCLOSURE OF THE INVENTION

Therefore, an object of the present invention is to provide a device, for purifying the exhaust gas of an internal combustion engine, which can determine correctly the timing for regenerating the particulate filter, arranged in the exhaust system of an internal combustion engine, by correctly estimating an amount of particulate trapped on the particulate filter when a fuel-cult is carried out, and which can decrease favorably the abnormally increased engine output when the engine output is abnormally produced.

According to the present invention, there is provided a device for purifying the exhaust gas of an internal combustion engine comprising: a particulate filter disposed in the engine exhaust system; a fresh intake air detection means for detecting an amount of fresh intake air introduced into the engine intake system; a throttle valve control means for increasing an opening degree of throttle valve to a set opening degree according to a fuel-cut order; and an estimation means for estimating an amount of particulates trapped on said particulate filter by comparing said amount of fresh intake air detected by said fresh intake air detection means, after said throttle valve is made said set opening degree by said throttle valve control means, and a reference value, characterized in that said device comprises an abnormal engine output detection means for detecting an abnormal engine output in which the engine output increases abnormally and, when said abnormal engine output detection means detects said abnormal engine output, said throttle valve control means does not increase an opening degree of said throttle valve.

### BRIEF DESCRIPTION OF THE DRAWINGS

Fig. 1 is a schematic view showing an embodiment of a device for purifying the exhaust gas of an internal combustion engine according to the present invention;
Fig. 2 is a flowchart for determining the timing for regeneration;
Fig. 3 is a plan view showing the structure around another particulate filter;
Fig. 4 is a side view of Fig. 3;
Fig. 5 is a view showing the other shut-off position of the valve body in the changeover portion that is different from that in Fig. 3;
Fig. 6(A) is a front view showing the structure of the particulate filter;
Fig. 6(B) is a side sectional view showing the structure of the particulate filter;
Figs. 7(A) and 7(B) are views explaining the oxidizing action of the particulates;
Fig. 8 is a view showing the relationship between the amount of particulates that can be oxidized and removed and the temperature of the particulate filter;
Figs. 9(A), 9(B), and 9(C) are views explaining the depositing action of the particulates; and
Figs. 10(A) and 10(B) are enlarged sectional views of the partition wall of the particulate filter with the residual particulates.

### BEST MODE FOR CARRYING OUT THE INVENTION

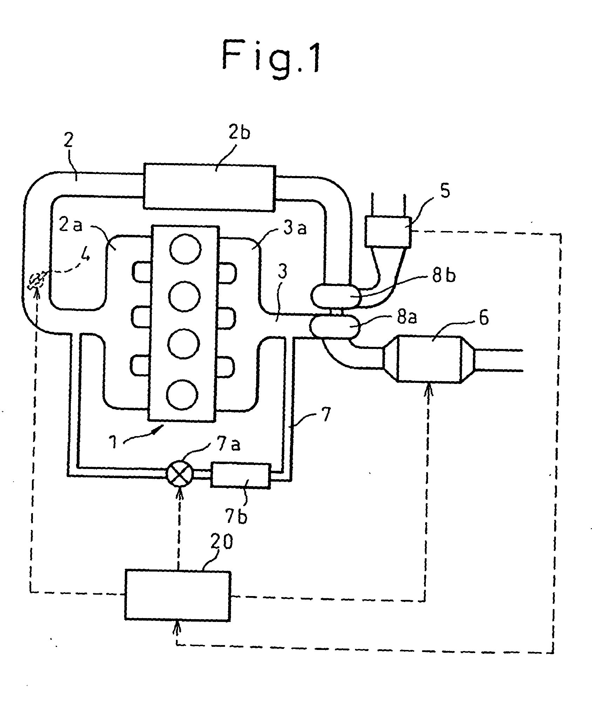

Fig. 1 is a view schematically illustrating a device for purifying exhaust gas of an internal combustion engine according to an embodiment of the present invention. In Fig. 1, reference numeral 1 denotes an engine body, 2 denotes an engine intake system, and 3 denotes an engine exhaust system. In the engine intake system 2, a throttle valve 4 is disposed on the upstream side of an intake manifold 2a connected to the cylinders, and an air flow meter 5 is disposed on the upstream side of the throttle valve 4 to detect an amount of the fresh intake air introduced into the engine intake system 2. The upstream side of the air flow meter 5 is open to the atmosphere via an air cleaner. In this embodiment, the throttle valve 4 is not one that is mechanically driven by being interlocked to the accelerator pedal, but can be freely set for its opening degree by using a throttle valve control means such as a step motor or the like.

On the other hand, in the engine exhaust system 3, a particulate filter 6 is disposed on the downstream side of the exhaust manifold 3a connected to the cylinders. The downstream side of the particulate filter 6 is open to the atmosphere via a catalytic converter and a silencer.

A portion between the intake manifold 2a and the throttle valve 4 in the engine intake system is communicated, through an exhaust gas recirculation passage 7, with a portion between the exhaust manifold 3a and the particulate filter 6 in the engine exhaust system. In the exhaust gas recirculation passage 7, a control valve 7a for controlling the amount of recirculated exhaust gas to an optimum amount in accordance with an engine operating condition is disposed.

Further, in the exhaust gas recirculation passage 7, an exhaust gas cooler 7b for cooling the recirculated exhaust gas is disposed such that a large amount of exhaust gas can be recirculated. In the engine exhaust system 3, a turbine 8a of a turbo-charger is provided between the connecting portion of the exhaust gas recirculation passage 7 and the particulate filter 6. In the engine intake system 2, a compressor 8b of the turbo-charger is provided between the throttle valve 4 and the air flow meter. Further, in the engine intake system 2, an intake air cooler 2b for cooling the fresh intake air is disposed such that a large amount of fresh intake air can be introduced into the cylinders.

The particulate filter 6 is, for example, a porous particulate filter made from a porous material such as a ceramic. The particulate filter has plural longitudinal spaces that are subdivided by plural partition walls extending longitudinally. In any two longitudinal spaces that are adjacent each other, closing members made from a ceramic close one longitudinal space on the exhaust gas upstream side and the other longitudinal space on the exhaust gas downstream side. Thus, the two longitudinal spaces that are adjacent each other form a trap passage in which the exhaust gas flows from the upstream side to the downstream side through the partition wall, and the partition walls made from a porous material work as a trap wall to trap the particulates when the exhaust gas passes therethrough.

Further, the particulate filter 6 may be, for example, a metallic fiber particulate filter comprising heat-durable metallic fiber nonwoven sheets and heat-durable metal corrugated plates. The particulate filter is constructed by two nonwoven sheets and two corrugated plates alternately overlaid with each other in the thickness direction in a spiral manner, and has plural longitudinal spaces between the nonwoven sheets and the corrugated plates. The heat-durable metallic fiber composing the nonwoven sheet and the heat-durable metal forming the corrugated plate may be, for example, an alloy of Fe-Cr-Al or Ni-Cr-Al. In the two nonwoven sheets, one surface of one nonwoven sheet and one surface of the other sheet are in close contact and are continuously welded, in a spiral manner, to each other along the upstream edges thereof, and the other surface of one nonwoven sheet and the other surface of the other nonwoven sheet are in close contact and are continuously, welded in a spiral manner, to each other along the downstream edges thereof. Thus, the two longitudinal spaces that are radially adjacent each other become a trap passage in which the exhaust gas flows from the upstream side to the downstream side through either nonwoven sheets, and the nonwoven sheets work as a trap wall to trap the particulates when the exhaust gas passes therethrough.

When an amount of particulate trapped by such a particulate filter 6 becomes large, the exhaust gas resistance increases and the engine output greatly decreases. It therefore becomes necessary to regenerate the particulate filter itself, by burning the particulates, when an appropriate amount of particulate is trapped.

For this purpose according to this embodiment, a heater is disposed in the particulate filter, and it becomes necessary to determine the timing for regeneration to energize the heater. As means for regenerating the particulate filter, an oxidation catalyst or the like may be disposed in the particulate filter and the unburned fuel may be supplied to the oxidation catalyst at the timing for regeneration.

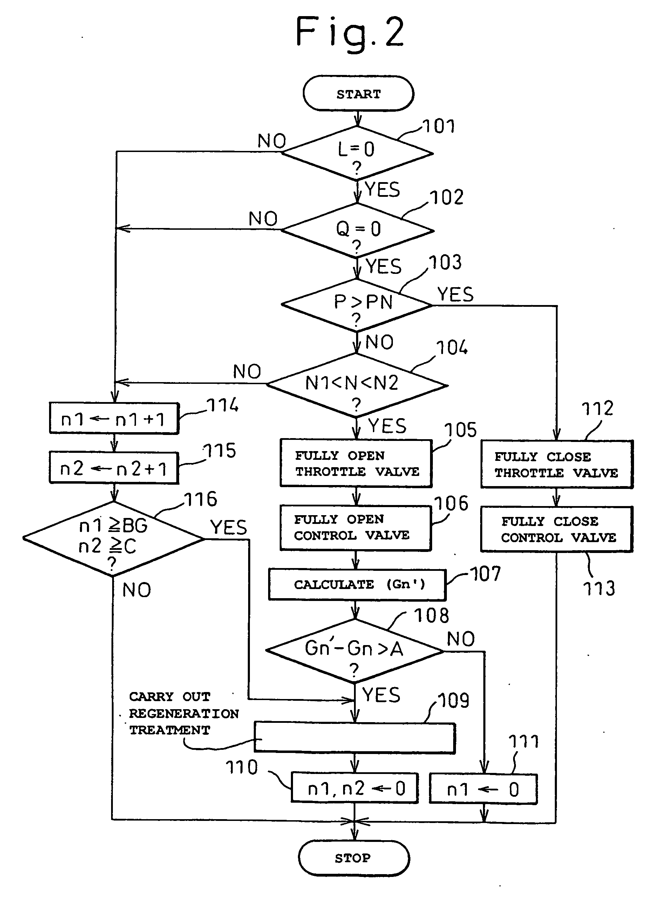

It is undesirable that the timing for regeneration be determined either too early or too late, i.e., it is necessary to correctly determine that an appropriate amount of particulate has been trapped. In the present embodiment, the timing for regeneration is determined by a control unit 20 according to a flowchart shown in Fig. 2.

At step 101, first, it is determined if a depressed amount (L) of the accelerator pedal detected by the accelerator pedal stroke sensor (not shown) is (O). When this determination is negative, the accelerator pedal has been depressed, i.e., the engine is in operation, and thus it is not possible to determine the timing for regeneration. Therefore, processes from step 114 to step 116, that are explained later in detail, are carried out and thereafter the routine ends.

On the other hand, when this determination is positive, when the accelerator pedal has not been depressed, the routine goes to step 102 where it is determined if the current amount of injected fuel (Q) is (O). When this determination is negative, the fuel is injected and the engine is in operation and thus it is not possible to determine the timing for regeneration. Therefore, the processes from step 114 to step 116 are carried out and thereafter the routine ends.

However, when the determination at step 102 is positive, the routine goes to step 103 where it is determined if a pressure (P) immediately downstream of the compressor 8b in the engine intake system 2 is larger than a set pressure (PN) according to the current engine speed. The set pressure (PN) is a boost pressure when no combustion is carried out in the cylinders, and is close to the atmosphere pressure. When a fuel-cut in which no fuel is injected is carried out, this determination is negative and the routine goes to step 104.

At step 104, it is determined if the current engine speed (N) is within a predetermined range. This predetermined range is, for example, from 1,000 rpm to 2,000 rpm. When the current engine speed is equal to or smaller than 1000 rpm, it is likely that the idle engine speed may soon be assumed to start the fuel injection again. When the engine speed is as high as 2,000 rpm or more, i.e., when the piston descends at a high speed, the amount of intake air taken in each cylinder becomes small. Therefore, when the current engine speed (N) is not within the predetermined range, the condition is not suited for correctly determining, the timing for regeneration. Therefore, the processes from step 114 to step 116 are carried out and, thereafter, the routine ends.

However, at step 104, when the current engine speed (N) is within the predetermined range, the routine goes to step 105 to determine the timing for regeneration. At step 105, the throttle valve 4 is set to an opening degree that is fully opened or nearly fully opened and at step 106, the control valve 7a is set to an opening degree that is fully opened or nearly fully opened. Next, at step 107, a reference value (Gn') of an amount of intake air that should be taken into each cylinder is calculated on the basis of the current engine speed (N). Of course, it is allowable to store the reference value (Gn') for every engine speed (N) in the form of a map.

Next, at step 108, it is determined if a difference between the reference value (Gn') calculated at step 107 and a practical amount of fresh intake air (Gn) detected by the air flow meter 5 is larger than a predetermined value (A). When this determination is negative, it is not the timing for regeneration and a first count value (n1) is reset (O) and thereafter the routine ends. On the other hand, when the determination at step 108 is positive, it is the timing for regeneration, and the heater arranged in the particulate filter 6 is energized to execute the regeneration treatment. During the regeneration of the particulate filter, the temperature of the exhaust gas immediately downstream of the particulate filter 6 rises due to the burning of the particulates. Accordingly, this exhaust gas temperature is detected, and when it is maintained in a relative high temperature for a predetermined period, it can be determined that the regeneration of the particulate filter is finished. At step 110, the first count value (n1) and a second count value (n2) are reset (O) after the regeneration is finished, and the routine ends.

On the basis of the fact that the amount of the fresh intake air decreases with an increase in the amount of trapped particulates, when the practical amount of the fresh intake air has dropped down to, for example, 80% of the reference value of the amount of fresh intake air when particulates are not trapped at all, it can be determined that an appropriate amount of particulates has been trapped on the particulate filter and it is the timing for regeneration.

In such a determination of the timing for regenerating the particulate filter on the basis of an amount of fresh intake air, it is necessary that an amount of fresh intake air is stable. For this purpose, if the determination is carried out for every steady engine operating condition, the determination may not be carried out for a long time in urban areas. Further, in the case that the engine has an exhaust gas recirculation passage such as in the present embodiment, the exhaust gas recirculation must be stopped in the determination and thus the amount of produced NOₓ increases. If the determination is carried out when a fuel-cut, in which combustion is stopped, is carried out, the determination is frequently carried out in urban areas irrespective of the amount of produced NOₓ. Therefore, when a fuel-cut is carried out, the timing for regeneration can be theoretically determined. However, the reference value itself is so small and thus, if a practical amount of fresh intake air becomes 80% of the reference value, only a small difference is caused. Therefore, it is not considered that the timing for regeneration can be correctly determined if a measurement error is taken into consideration.

In the present embodiment, the throttle valve is opened nearly fully when the fuel-cut is carried out, and thus an amount of fresh intake air is increased and the reference value is increased. When the fuel-cut is carried out, an amount of fresh intake air can be increased without a problem. Therefore, the timing for regeneration can be correctly determined frequently, in urban areas, irrespective of the amount of produced NOₓ.

Further, in the present embodiment, when the fuel-cut is carried out, the control valve in the exhaust gas recirculation passage 7 is fully opened. If no particulates have been trapped on the particulate filter 6, the pressure is nearly equal between the downstream of the throttle valve 4 in the engine intake system 2 and the upstream of the particulate filter 6 in the engine exhaust system 3, and only a small amount of the gas passes through the exhaust gas recirculation passage 7 if it flows at all. Accordingly, the reference value (Gn') becomes nearly equal to the practical amount of fresh intake air (Gn), and thus the determination at step 108 is negative.

However, when the particulates are trapped on the particulate filter 6 and its exhaust gas resistance increases, the pressure increases on the upstream side of the particulate filter 6 in the engine exhaust system 3, the gas starts recirculating into the engine intake system passing through the exhaust gas recirculation passage 7 and the more the amount of the gas increases, the more the amount of trapped particulates increases. Therefore, the practical amount of fresh intake air decreases with an increase in the exhaust gas resistance through the particulate filter 6, and decreases with an increase in the amount of the recirculation gas.

Thus, when the appropriate amount of particulate is trapped on the particulate filter 6, there occurs a distinct difference between the reference value (Gn') and the practical amount of fresh intake air (Gn). Therefore, at step 108, it is possible to use a relatively large value (A), and the timing for regeneration can be correctly determined even if some degree of error is contained in the measurement. Here, the difference between the reference value (Gn') and the practical amount of fresh intake air (Gn) represents the amount of particulates trapped on the particulate filter 6.

In the determination of the timing for regeneration on the basis of the amount of trapped particulate according to the present embodiment, the throttle valve 4 is fully opened and the engine speed (N) is within the predetermined range on the low engine speed side. Although this is not to limit the present invention, this makes possible to set the reference value (Gn') of the amount of fresh intake air to be a large value when no particulates have been trapped on the particulate filter 6, offering an advantage in correctly detecting the amount of trapped particulates or in correctly determining the timing for regeneration. Further, in the present embodiment, in order to determine the timing for regeneration more correctly, the predetermined value (A) may be varied in accordance with the engine speed.

In the present embodiment, the difference between the reference value (Gn') and the practical amount of fresh intake air (Gn) is used as the amount of trapped particulates, and it is determined to be the timing for regeneration when the difference has exceeded the predetermined value (A). Of course, also, the ratio (Gn/G'n) of the practical amount of fresh intake air (Gn) to the reference value (Gn') represents the amount of trapped particulates. The ratio value becomes (l) when the amount of trapped particulates is (O), and decreases with an increase in the amount of trapped particulates. Therefore, when the ratio value becomes a predetermined value (e.g., 0.6), i.e., when the practical amount of fresh intake air (Gn) becomes 60% of the reference value (Gn'), it may be determined to be the timing for regeneration. Here, the predetermined value 60% is used, and this has resulted from the recirculation of the gas through the exhaust gas recirculation passage 7, which, however, is not to mean that the particulate filter is preventing the passage of the exhaust gas by 40% but means that the amount of the fresh intake air has drastically decreased compared to the prior art when an appropriate amount of particulates have been trapped.

Thus, when the fuel-cut in which no fuel is supplied into the cylinder is carried out, if the throttle valve 4 is opened nearly fully, such as in the present embodiment, the timing for regeneration can be determined relative correctly. An amount of fuel larger than the intended amount can be supplied into the cylinder due to an abnormality of the fuel injection system or oil leaked into the engine intake system can be supplied into the cylinder, and therefore it is considerable that an engine output larger than the intended one is produced. In such a case that the engine output is abnormal, a driver releases the accelerator pedal for a deceleration of the vehicle and thus a fuel-cut order is issued. If the throttle valve 4 is opened on the basis of the fuel-cut order, an amount of fresh intake air is not decreased and thus the abnormal increased engine output cannot be decreased favorably.

However, in the present flowchart, in order to prevent this, at step 103, the boost pressure (P) is determined. Even if an amount of injected fuel (Q) on the basis of the order to the fuel injector is (O), if the boost pressure (P) is higher than the atmospheric pressure, combustion is carried out in the cylinder and thus the turbine 8a speed is maintained relative high by a high pressure exhaust gas. Therefore, when the determination at step 103 is positive, it is considerable that the engine output is abnormal and thus the determination of the timing for regeneration involving the opening of the throttle valve is stopped.
Accordingly, at step 112, the throttle valve is fully closed and at step 113, the control valve 7a is fully closed.

Therefore, even if fuel or oil has been supplied into the cylinder, an amount of fresh intake air is throttled and thus an amount of oxygen supplied into the cylinder is decreased. Further, oxygen that has not been used in combustion is not supplied into the cylinder with the exhaust gas via the exhaust gas recirculation passage 7. Thus, the combustion in the cylinder does not continue and thus the abnormal increased engine output can be decreased favorably. Step 103 in the present flowchart is to determine the combustion in the cylinder. Of course, instead of the detection of the boost pressure, a combustion pressure in the cylinder may be directly detected or an exhaust pressure immediately downstream of the exhaust manifold 3 may be detected.

By the way, in the present flowchart, only when the engine speed (N) during the fuel-cut is within the predetermined range, is the timing for regeneration of the particulate filter 6 determined. Therefore, the determination of the timing for regeneration is correct. However, on the other hand, when a driver releases the accelerator pedal and the fuel-cut is carried out, the driver can depress the clutch pedal, can change the position of the shift lever to the low speed side, or can depress slightly the brake pedal, and thus the driver can frequently carry out an operation by which the engine speed varies greatly. In this case, the determination of the timing for regeneration of the particulate filter 6 is not carried out for a long time and thus, even though a large amount of particulates are trapped, the regeneration of the particulate filter is not carried out. Therefore, a problem, in which a traveling ability drops suddenly or the like, occurs.

In the present flowchart, in order to prevent from this, when the determination of the timing for regeneration is not carried out during the execution of the flowchart, the first count value (n1) is increased by (1) at step 114, the second count value (n2) is increased by (1) at step 115, and at step 116, it is determined if the first count value (n1) is equal to or larger than a first set value (BG) and the second count value (n2) is equal to or larger than a second set value (C). Only when this determination is negative, does the routine end.

The first count value (n1) is reset (O) at the above-mentioned steps 110 and 111, i.e., when the determination of the timing for regeneration is carried out, it is reset (O). Thus, when the first count value (n1) becomes equal to or larger than the first set value (BG) at step 116, it is considered that the determination of the timing for regeneration has not been carried out for a long time since the last determination of the timing for regeneration was carried out. Accordingly, now can become the timing for regeneration of the particulate filter 6. The first set value (BG) may be a constant. However, it is preferable that the larger the amount of trapped particulate detected last time (Gn'-Gn) is, the smaller the first set value is made. Therefore, the possibility in which now has become the timing for regeneration of the particulate filter 6 can be determined more correctly.

Of course, it may be considered that now has become the timing for regeneration of the particulate filter 6 by only the determination of the first count value (n1). However, in order that this determination is made more correctly, the determination of the second count value (n2) is also carried out. The second count value (n2) is reset (O) only at the above-mentioned step 110, i.e., only when the treatment of regeneration is finished, it is reset (O). Thus, when the second count value (n2) becomes equal to or larger than the second set value (C) at step 116, it is considered that the treatment of regeneration has not been carried out for a long time since the last treatment of regeneration was carried out, and if, in addition to this, the first count value (n1) is equal to or larger than the first set value (GB), the particulate filter 6 certainly becomes the timing for regeneration. Therefore, the determination at step 116 is positive and the treatment of regeneration is compulsorily carried out at step 109.

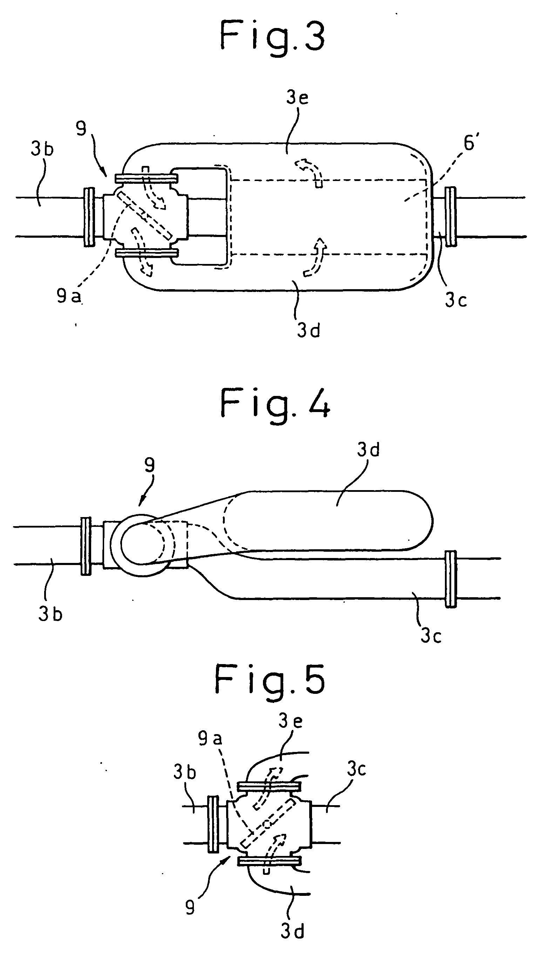

Fig. 3 is a plan view showing the structure around another particulate filter 6' different from the above-mentioned particulate filter comprising the regeneration means such as a heater or the like. Fig. 4 is a side view thereof. In this structure, a changeover portion 9 connected to the downstream side of the exhaust manifold 3a via an exhaust pipe 3b, the particulate filter 6', a first connecting portion 3d for connecting one side of the particulate filter 6' to the changeover portion 9, a second connecting portion 3e for connecting the other side of the particulate filter 6' to the changeover portion 9, and an exhaust passage 3c downstream of the changeover portion 9 are provided. The changeover portion 9 comprises a valve body 9a that can shut the exhaust flow in the changeover portion 9. At one shut-off position of the valve body 9a, the upstream side in the changeover portion 9 is communicated with the first connecting portion 3d and the downstream side in the changeover portion 9 is communicated with the second connecting portion 3e, and thus the exhaust gas flows from one side of the particulate filter 6' to the other side thereof as shown by arrows in Fig. 3.

Fig. 5 illustrates the other shut-off position of the valve body 9a. At this shut-off position, the upstream side in the changeover portion 9 is communicated with the second connecting portion 3e and the downstream side in the changeover portion 9 is communicated with the first connecting portion 3d, and thus the exhaust gas flows from the other side of the particulate filter 6' to the one side thereof as shown by arrows in Fig. 5. Thus, by changing over the valve body 9a, the direction of the exhaust gas flowing into the particulate filter 6' can be reversed, i.e., the exhaust gas upstream side and the exhaust gas downstream side of the particulate filter 6' can be reversed.

Thus, the present structure around the particulate filter is very simple and can reverse the exhaust gas upstream side and the exhaust gas downstream side of the particulate filter. Further, the particulate filter requires a large opening area to facilitate the introduction of the exhaust gas. In the present structure around the particulate filter, the particulate filter having a large opening area can be used without making it difficult to mount it on the vehicle as shown in Figs. 3 and 4.

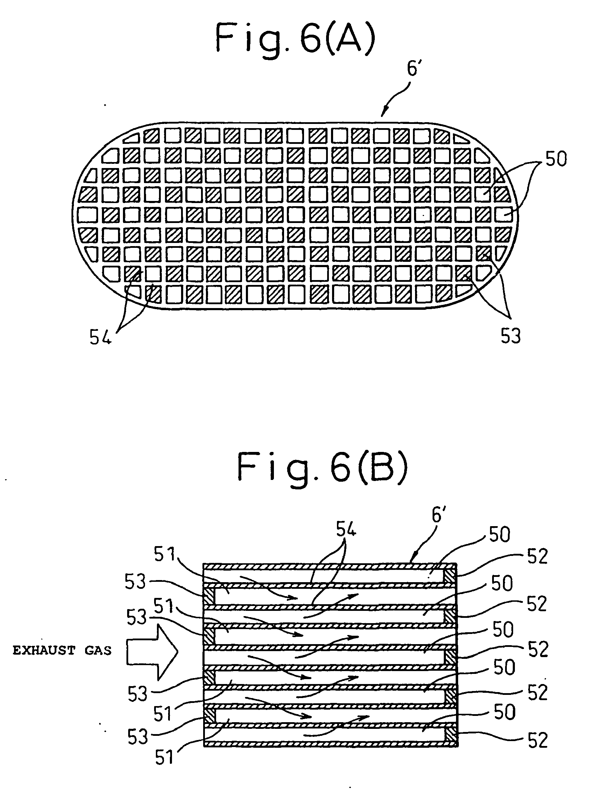

Figs. 6(A) and 6(B) show the structure of the particulate filter 6'. Fig. 6(A) is a front view of the particulate filter 6' and Fig. 6(B) is a side sectional view thereof. As shown in these figures, the particulate filter 6' has an oval shape, and is, for example, the wall-flow type of a honeycomb structure formed of a porous material such as cordierite, and has many spaces in the axial direction divided by many partition walls 54 extending in the axial direction. One of any two neighboring spaces is closed by a plug 53 on the exhaust gas downstream side, and the other one is closed by a plug 52 on the exhaust gas upstream side. Thus, one of the two neighboring spaces serves as an exhaust gas flow-in passage 50 and the other one serves as an exhaust gas flow-out passage 51, causing the exhaust gas to necessarily pass through the partition wall 54 as indicated by arrows in Fig. 6(B). The particulates contained in the exhaust gas are much smaller than the pores of the partition wall 54, but collide with and are trapped on the exhaust gas upstream side surface of the partition wall 54 and the pores surface in the partition wall 54. Thus, each partition wall 54 works as a trapping wall for trapping the particulates. In the present particulate filter 6', in order to oxidize and remove the trapped particulates, an active-oxygen releasing agent and a noble metal catalyst, which will be explained below, are carried by use of alumina on both side surfaces of the partition wall 54 and preferably also on the pore surfaces in the partition wall 54.

The active-oxygen releasing agent releases active-oxygen to promote the oxidation of the particulates and, preferably, takes in and holds oxygen when excessive oxygen is present in the surroundings and releases the held oxygen as active-oxygen when the oxygen concentration in the surroundings drops.

As the noble metal catalyst, platinum Pt is usually used. As the active-oxygen releasing agent, there is used at least one selected from alkali metals such as potassium K, sodium Na, lithium Li, cesium Cs, and rubidium Rb, alkali earth metals such as barium Ba, calcium Ca, and strontium Sr, rare earth elements such as lanthanum La and yttrium Y, and transition metals.

As an active-oxygen releasing agent, it is desired to use an alkali metal or an alkali earth metal having an ionization tendency stronger than that of calcium Ca, i.e., to use potassium K, lithium Li, cesium Cs, rubidium Rb, barium Ba, or strontium Sr.

Next, explained below is how the trapped particulates on the particulate filter are oxidized and removed by the particulate filter carrying such an active-oxygen releasing agent with reference to the case of using platinum Pt and potassium K. The particulates are oxidized and removed in the same manner even by using another noble metal and another alkali metal, an alkali earth metal, a rare earth element, or a transition metal.

In a diesel engine, the combustion usually takes place in an excess air condition and, hence, the exhaust gas contains a large amount of excess air. That is, if the ratio of the air to the fuel supplied to the intake system and to the combustion chamber is referred to as an air-fuel ratio of the exhaust gas, the air-fuel ratio is lean. Further, NO generates in the combustion chamber and, hence, the exhaust gas contains NO. Further, the fuel contains sulfur S and sulfur S reacts with oxygen in the combustion chamber to form SO₂. Accordingly, the exhaust gas contains SO₂. Therefore, the exhaust gas containing excessive oxygen, NO, and SO₂ flows into the exhaust gas upstream side of the particulate filter 6'.

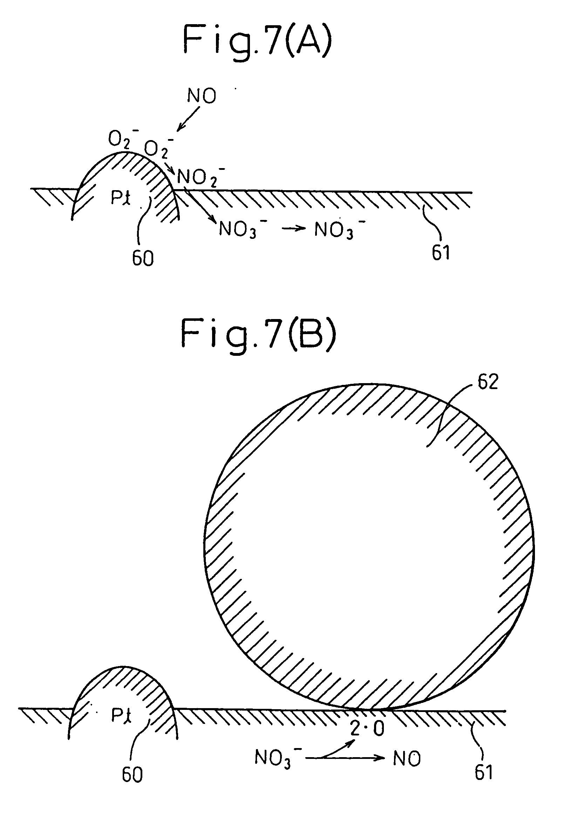

Figs. 7(A) and 7(B) are enlarged views schematically illustrating the surface of the particulate filter 6' with which the exhaust gas comes in contact. In Figs. 7(A) and 7(B), reference numeral 60 denotes a particle of platinum Pt and 61 denotes the active-oxygen releasing agent containing potassium K.

As described above, the exhaust gas contains a large amount of excess oxygen. When the exhaust gas contacts with the exhaust gas contact surface of the particulate filter, oxygen O₂ adheres onto the surface of platinum Pt in the form of O₂⁻ or O²⁻ as shown in Fig. 7 (A). On the other hand, NO in the exhaust gas reacts with O₂⁻ or O²⁻ on the surface of platinum Pt to produce NO₂ (2NO+O₂ → 2NO₂). Next, a part of the produced NO₂ is absorbed in the active-oxygen releasing agent 61 while being oxidized on platinum Pt, and diffuses in the active-oxygen releasing agent 61 in the form of nitric acid ions NO₃⁻ while being combined with potassium K to form potassium nitrate KNO₃ as shown in Fig. 7(A). Thus, in the present embodiment, harmful NOₓ contained in the exhaust gas is absorbed in the particulate filter 6' and amount thereof released into the atmosphere can be decreased.

Further, the exhaust gas contains SO₂, as described above, and SO₂ also is absorbed in the active-oxygen releasing agent 61 due to a mechanism similar to that of the case of NO. That is, as described above, oxygen O₂ adheres on the surface of platinum Pt in the form of O₂⁻ or O²⁻, and SO₂ in the exhaust gas reacts with O₂⁻ or O²⁻ on the surface of platinum Pt to produce SO₃. Next, a part of the produced SO₃ is absorbed in the active-oxygen releasing agent 61 while being oxidized on the platinum Pt and diffuses in the active-oxygen releasing agent 61 in the form of sulfuric acid ion SO₄²⁻ while being combined with potassium K to produce potassium sulfate K₂SO₄. Thus, potassium nitrate KNO₃ and potassium sulfate K₂SO₄ are produced in the active-oxygen releasing agent 61.

The particulates in the exhaust gas adhere on the surface of the active-oxygen releasing agent 61 carried by the particulate filter as designated at 62 in Fig. 7(B). At this time, the oxygen concentration drops on the surface of the active-oxygen releasing agent 61 with which the particulates 62 are in contact. As the oxygen concentration drops, there occurs a difference in the concentration from the active-oxygen releasing agent 61 having a high oxygen concentration and, thus, oxygen in the active-oxygen releasing agent 61 tends to migrate toward the surface of the active-oxygen releasing agent 61 with which the particulates 62 are in contact. As a result, potassium nitrate KNO₃ produced in the active-oxygen releasing agent 61 is decomposed into potassium K, oxygen O and NO, whereby oxygen O migrates toward the surface of the active-oxygen releasing agent 61 with which the particulates 62 are in contact, and NO is emitted to the outside from the active-oxygen releasing agent 61. NO emitted to the outside is oxidized on the platinum Pt on the downstream side and is absorbed again in the active-oxygen releasing agent 61.

At this time, further, potassium sulfate K₂SO₄ produced in the active-oxygen releasing agent 61 is also decomposed into potassium K, oxygen O, and SO₂, whereby oxygen O migrates toward the surface of the active-oxygen releasing agent 61 with which the particulates 62 are in contact, and SO₂ is emitted to the outside from the active-oxygen releasing agent 61. SO₂ released to the outside is oxidized on the platinum Pt on the downstream side and is absorbed again in the active-oxygen releasing agent 61. Here, however, potassium sulfate K₂SO₄ is stable and releases less active-oxygen than potassium nitrate KNO₃.

On the other hand, oxygen O migrating toward the surface of the active-oxygen releasing agent 61 with which the particulates 62 are in contact is the one decomposed from such compounds as potassium nitrate KNO₃ or potassium sulfate K₂SO₄. Oxygen O decomposed from such compounds has a high level of energy and exhibits a very high activity. Therefore, oxygen migrating toward the surface of the active-oxygen releasing agent 61 with which the particulates 62 is in contact is active-oxygen O. Upon coming into contact with active-oxygen O, the particulates 62 are oxidized without producing luminous flame in a short time, for example, in a few minutes or a few tens of minutes. Further, active-oxygen to oxidize the particulates 62 is also released when NO and SO₂ have been absorbed in the active-oxygen releasing agent 61. That is, it can be considered that NOₓ diffuses in the active-oxygen releasing agent 61 in the form of nitric acid ion NO₃⁻ while being combined with oxygen atoms and to be separated from oxygen atoms, and during this time, active-oxygen is produced. The particulates 62 are also oxidized by this active-oxygen. Further, the particulates 62 adhered on the particulate filter 70 are oxidized not only by active-oxygen, but also by oxygen contained in the exhaust gas.

The higher the temperature of the particulate filter becomes, the more the platinum Pt and the active-oxygen releasing agent 61 are activated. Therefore, the higher the temperature of the particulate filter becomes, the larger the amount of active-oxygen O released from the active-oxygen releasing agent 61, per unit time, becomes. Further, naturally, the higher the temperature of particulates is, the easier the particulates are oxidized. Therefore, the amount of particulates that can be oxidized and removed without producing luminous flame on the particulate filter per unit time increases along with an increase in the temperature of the particulate filter.

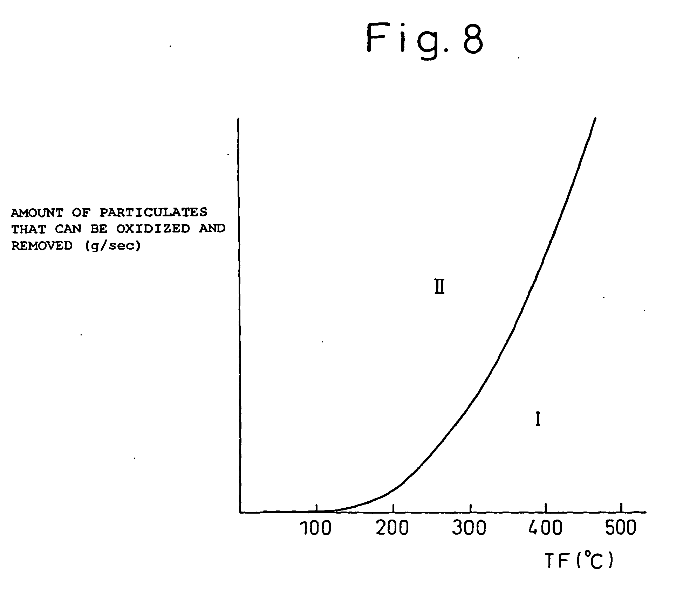

The solid line in Fig. 8 shows the amount of particulates (G) that can be oxidized and removed without producing luminous flame per unit time. In Fig. 8, the abscissa represents the temperature (TF) of the particulate filter. Here, Fig. 8 shows the case that the unit time is 1 second, that is, the amount of particulates (G) that can be oxidized and removed per 1 second. However, any time such as 1 minute, 10 minutes, or the like can be selected as unit time. For example, in the case that 10 minutes is used as unit time, the amount of particulates (G) that can be oxidized and removed per unit time represents the amount of particulates (G) that can be oxidized and removed per 10 minutes. In also this case, the amount of particulates (G) that can be oxidized and removed without producing luminous flame increases along with an increase in the temperature of particulate filter 70 as shown in Fig. 8.

The amount of particulates emitted from the combustion chamber per unit time is referred to as an amount of emitted particulates (M). When the amount of emitted particulates (M) is smaller than the amount of particulates (G) that can be oxidized and removed, for example, the amount of emitted particulates (M) per 1 second is smaller than the amount of particulates (G) that can be oxidized and removed per 1 second or the amount of emitted particulates (M) per 10 minutes is smaller than the amount of particulates (G) that can be oxidized and removed per 10 minutes, that is, in the area (I) of Fig. 8, the particulates emitted from the combustion chamber are all oxidized and removed, without producing luminous flame, successively on the particulate filter 70 in the short time.

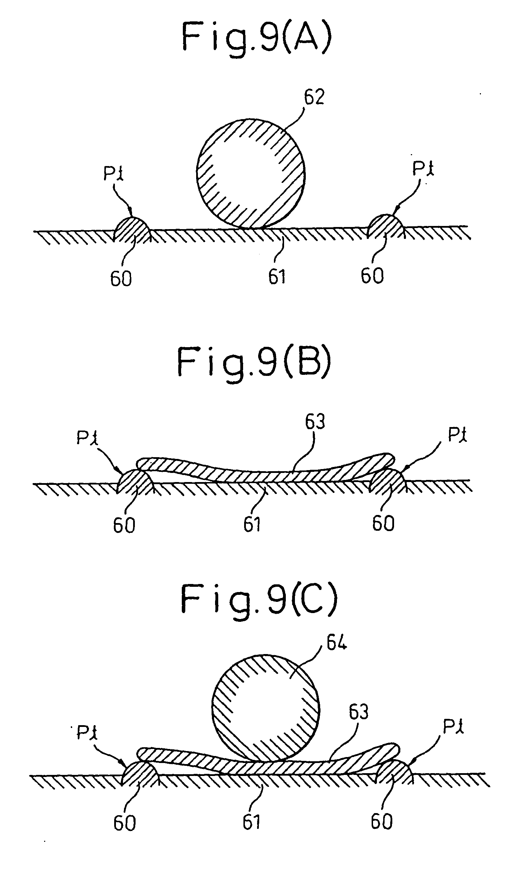

On the other hand, when the amount of emitted particulates (M) is larger than the amount of particulates that can be oxidized and removed (G), that is, in the area (II) of Fig. 8, the amount of active-oxygen is not sufficient for all particulates to be oxidized and removed successively. Figs. 9(A) to (C) illustrate the manner of oxidation of the particulates in such a case.

That is, in the case that the amount of active-oxygen is lacking for oxidizing all particulates, when the particulates 62 adhere on the active-oxygen releasing agent 61, only a part of the particulates is oxidized as shown in Fig. 9(A), and the other part of the particulates that was not oxidized sufficiently remains on the exhaust gas upstream surface of the particulate filter. When the state where the amount of active-oxygen is lacking continues, a part of the particulates that was not oxidized remains on the exhaust gas upstream surface of the particulate filter successively. As a result, the exhaust gas upstream surface of the particulate filter is covered with the residual particulates 63 as shown in Fig. 9(B).

The residual particulates 63 are gradually transformed into carbonaceous matter that can hardly be oxidized. Further, when the exhaust gas upstream surface is covered with the residual particulates 63, the action of the platinum Pt for oxidizing NO and SO₂, and the action of the active-oxygen releasing agent 61 for releasing active-oxygen, are suppressed. The residual particulates 63 can be gradually oxidized over a relatively long period. However, as shown in Fig. 9(C), other particulates 64 deposit on the residual particulates 63 one after the other, and when the particulates are deposited so as to laminate, even if they are the easily oxidized particulates, these particulates may not be oxidized since these particulates are separated from the platinum Pt or from the active-oxygen releasing agent. Accordingly, other particulates deposit successively on these particulates 64. That is, when the state where the amount of emitted particulates (M) is larger than the amount of particulates that can be oxidized and removed (G) continues, the particulates deposit and laminate on the particulate filter.

Thus, in the area (I) of Fig. 8, the particulates are oxidized and removed without producing luminous flame in a short time and in the area (II) of Fig. 8, the particulates are deposited to laminate on the particulate filter. Therefore, the deposition of the particulates on the particulate filter can be prevented if the relationship between the amount of emitted particulates (M) and the amount of particulates that can be oxidized and removed (G) is in the area (I). As a result, a pressure loss of the exhaust gas in the particulate filter hardly changes and is maintained at a minimum pressure loss value that is nearly constant. Thus, the decrease of the engine output can be maintained as low as possible. However, this is not always realized, and the particulates may deposit on the particulate filter if nothing is done.

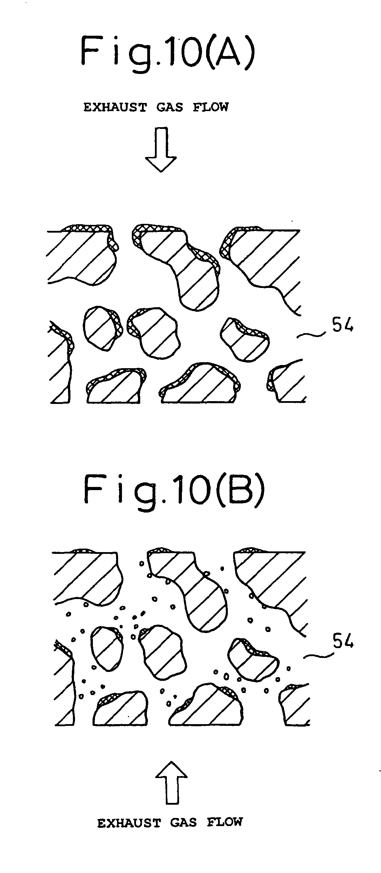

Before such deposited particulates increase so as to has a bad influence on the traveling of the vehicle, for example, when the particulates deposits in a degree as shown in Fig. 10(A), the above-mentioned flowchart determines that the particulate filter is the timing for regeneration and the valve body 9a may be changed over to one of the shut-off positions to the other as the treatment of regeneration. In the wall-flow type particulate filter, the particulates collide with and are trapped by the exhaust gas upstream surface of the partition wall 54 and the exhaust gas opposing surface in the pores therein, i.e., one of the trapping surfaces of the partition wall 54. If active-oxygen released from the one of the trapping surfaces is insufficient for the trapped particulates, all of the trapped particulates are not oxidized and removed and a part of the trapped particulates remains. Therefore, other particulates deposit on the residual particulates one after the other.

If the upstream side and the downstream side of the particulate filter are reversed by changing over the valve body 9a, no particulates deposit again on the residual particulates on the one of the trapping surfaces of the partition wall and thus the residual particulates can be gradually oxidized and removed by active-oxygen released from the one of the trapping surfaces. Further, in particular, the residual particulates in the pores in the partition wall are easily smashed into fine pieces by the exhaust gas flow in the reverse direction as shown in Fig. 10(B), and they mainly move through the pores toward the downstream side.

Accordingly, many of the particulates smashed into fine pieces diffuse in the pore in the partition wall, that is, the particulates flow in the pore. Therefore, they contact directly the active-oxygen releasing agent carried on the pores surface and thus have many chances to be oxidized and removed. Thus, if the active-oxygen releasing agent is also carried on the pores surface in the partition wall, the residual particulates can be very easily oxidized and removed. On the other trapping surface, that is now on the upstream side, as the flow of the exhaust gas is reversed, i.e., the exhaust gas upstream surface of the partition wall 54 and the exhaust gas opposing surface in the pores therein to which the exhaust gas mainly impinges (of the oppose side of one of the trapping surfaces), the particulates in the exhaust gas adhere newly thereto and are oxidized and removed by active-oxygen released from the active-oxygen releasing agent. In this oxidization, a part of the active-oxygen released from the active-oxygen releasing agent on the other trapping surface moves to the downstream side with the exhaust gas, and it is made to oxidize and remove the particulates that still remain on one of the trapping surfaces despite of the reversed flow of the exhaust gas.

That is, the residual particulates on one of the trapping surfaces are exposed not only to active-oxygen released from this trapping surface but also the remainder of the active-oxygen used for oxidizing and removing the particulates on the other trapping surface by reversing the flow of the exhaust gas. Therefore, even if some particulates deposit and laminate on one of the trapping surfaces of the partition wall of the particulate filter when the exhaust gas flow is reversed, active-oxygen arrives at the deposited particulates and no particulates deposit again on the deposited particulates due to the reversed flow of the exhaust gas and thus the deposited particulates are gradually oxidized and removed and can be oxidized and removed sufficiently till the valve body is changed over again in the timing for regeneration with the deposition of particulates on the other of the trapping surfaces that traps the particulates now. Further, the two trapping surfaces of the partition wall of the particulate filter are used alternately to trap the particulates and thus an amount of particulates trapped on each trapping surface can be decreased to less than in case where one trapping surface always traps the particulates. This is an advantage in oxidizing and removing the articulates.

Further, when the air-fuel ratio of the exhaust gas is made rich, i.e., when the oxygen concentration in the exhaust gas is decreased, active-oxygen O is released at one time from the active-oxygen releasing agent 61 to the outside. Therefore, the deposited particulates become particulates that are easily oxidized by the active-oxygen O released at one time and thus they can be easily oxidized and removed.

On the other hand, when the air-fuel ratio is maintained lean, the surface of platinum Pt is covered with oxygen, that is, oxygen contamination is caused. When such oxygen contamination is caused, the oxidization action to NOₓ of platinum Pt drops and thus the absorbing efficiency of NOₓ drops. Therefore, the amount of active-oxygen released from the active-oxygen releasing agent 61 decreases. However, when the air-fuel ratio is made rich, oxygen on the surface of platinum Pt is consumed and thus the oxygen contamination is cancelled. Accordingly, when the air-fuel ratio is changed over from rich to lean again, the oxidization action to NOₓ becomes strong and thus the absorbing efficiency rises. Therefore, the amount of active-oxygen released from the active-oxygen releasing agent 61 increases.

Thus, when the air-fuel ratio is maintained lean, if the air-fuel ratio is changed over from lean to rich once in a while, the oxygen contamination of platinum Pt is cancelled every this time and thus the amount of released active-oxygen when the air-fuel ratio is lean increases. Therefore, the oxidization action of the particulates on the particulate filter can be promoted.

Further, the result of the cancellation of the oxygen contamination is that reducing agent burns and thus the burned heat thereof raises the temperature of the particulate filter. Therefore, the amount of particulates that can be oxidized and removed from the particulate filter increases and thus the residual and deposited particulates are oxidized and removed more easily. If the air-fuel ratio in the exhaust gas is made rich immediately after the upstream side and the downstream side of the particulate filter is reversed by the valve body 9a, the other trapping surface on which the particulates do not remain releases active-oxygen more easily than the first trapping surface. Thus, the larger amount of released active-oxygen can oxidize and remove the residual particulates on the first trapping surface more certainly. Of course, the air-fuel ratio of the exhaust gas may be sometimes made rich regardless the changeover of the valve body 9a. Therefore, the particulates hardly remain or deposit on the particulate filter.

As a method to make the air-fuel ratio rich, in addition to the main fuel injection in the compression stroke, the fuel injector may inject fuel into the cylinder in the exhaust stroke or the expansion stroke (post-injection) or may inject fuel into the cylinder in the intake stroke (pre-injection). Of course, an interval between the post-injection or the pre-injection and the main fuel injection may not be provided. Further, fuel may be supplied to the exhaust system.

By the way, when SO₃ exists, calcium Ca in the exhaust gas forms calcium sulfate CaSO₄. Calcium sulfate CaSO₄ is hard to oxidize and remove and thus it remains on the particulate filter as ash. To prevent blocking of the meshes of the particulate filter caused by the remained calcium sulfate CaSO₄, it is preferable that an alkali metal or an alkali earth metal having an ionization tendency stronger than that of calcium Ca, such as potassium K is used as the active-oxygen releasing agent 61. Therefore, SO₃ diffused in the active-oxygen releasing agent 61 is combined with potassium K to form potassium sulfate K₂SO₄ and thus calcium Ca is not combined with SO₃ but passes through the partition walls of the particulate filter. Accordingly, the meshes of the particulate filter are not blocked by the ash. Thus, it is desired to use, as the active-oxygen releasing agent 61, an alkali metal or an alkali earth metal having an ionization tendency stronger than calcium Ca, such as potassium K, lithium Li, cesium Cs, rubidium Rb, barium Ba or strontium Sr.

Even when only a noble metal such as platinum Pt is carried on the particulate filter as the active-oxygen releasing agent, active-oxygen can be released from NO₂ or SO₃ held on the surface of platinum Pt. However, in this case, a curve that represents the amount of particulates that can be oxidized and removed (G) is slightly shifted toward the right compared with the solid curve shown in Fig. 8. Further, ceria can be used as the active-oxygen releasing agent. Ceria absorbs oxygen when the oxygen concentration is high (Ce₂O₃ → 2CeO₂) and releases active-oxygen when the oxygen concentration decreases (2CeO₂ → Ce₂O₃). Therefore, in order to oxidize and remove the particulates, the air-fuel ratio of the exhaust gas must be made rich at regular intervals or at irregular intervals. Instead of the ceria, iron Fe or tin Sn can be used as the active-oxygen releasing agent.

As the active-oxygen releasing agent, further, it is also allowable to use an NOₓ absorbent for purifying NOₓ. In this case, the air-fuel ratio of the exhaust gas must be made rich at least temporarily to release and reduce the absorbed NOₓ and SOₓ. It is preferable to make the air-fuel ratio rich after the exhaust gas upstream side and the exhaust gas downstream side of the particulate filter are reversed.

### LIST OF REFERENCE NUMBER

- 1 ...: ENGINE BODY
- 2 ...: ENGINE INTAKE SYSTEM
- 3 ...: ENGINE EXHAUST SYSTEM
- 4 ...: THROTTLE VALVE
- 5 ...: AIR FLOW METER
- 6 ...: PARTICULATE FILTER
- 7 ...: EXHAUST GAS RECIRCULATION PASSAGE
- 7a ...: CONTROL VALVE
- 20 ...: CONTROL UNIT

## Claims

1. A device for purifying the exhaust gas of an internal combustion engine comprising: a particulate filter (6) disposed in the engine exhaust system (3); a fresh intake air detection means (5) for detecting an amount of fresh intake air introduced into the engine intake system (2); a throttle valve control means for increasing an opening degree of throttle valve (4) to a set opening degree according to a fuel-cut order; and a trapped particulates amount estimation means (20) for estimating an amount of particulates trapped on said particulate filter (6) by comparison of said amount of fresh intake air detected by said fresh intake air detection means (5) after said throttle valve (4) is made said set opening degree by said throttle valve control means and a reference value,
**characterized in that**
said device comprises an abnormal engine output detection means (S103) for detecting an abnormal engine output in which the engine output increases abnormally, and when said abnormal engine output detection means (S103) detects said abnormal engine output, it is prevented that said throttle valve control means increases an opening degree of said throttle valve (4).

2. A device for purifying the exhaust gas of an internal combustion engine according to claim 1, **characterized in that** said device further comprises an exhaust gas recirculation passage (7) communicating the upstream side of said particulate filter (6) in said engine exhaust system (3) with the downstream side of said throttle valve (4) in said engine intake system (2), and a control valve (7a) for controlling an amount of exhaust gas recirculated through said exhaust gas recirculation passage (7) to an optimum amount in accordance with an engine operating condition and, when said trapped particulates amount estimation means (20) estimates said amount of trapped particulates, an opening degree of said control valve (7a) is increased to a set opening degree before said fresh intake air detection means (5) detects said amount of fresh intake air.

3. A device for purifying the exhaust gas of an internal combustion engine according to claim 1 or 2, **characterized in that** said abnormal engine output detection means (S103) detects combustion in the cylinder, immediately after said fuel-cut order is issued, as said abnormal engine output.

4. A device for purifying the exhaust gas of an internal combustion engine according to claim 3, **characterized in that** said device further comprises a turbo-charger (8a, 8b) for boosting the intake air, and said abnormal engine output detection means (S103) detects said combustion on the basis of the boost pressure of said turbo-charger (8a, 8b).

5. A device for purifying the exhaust gas of an internal combustion engine according to claim 3, **characterized in that** said abnormal engine output detection means (S103) detects said combustion on the basis of the pressure in said cylinder.

6. A device for purifying the exhaust gas of an internal combustion engine according to claim 3, **characterized in that** said abnormal engine output detection means (S103) detects said combustion on the basis of the exhaust pressure of gas exhausted from said cylinder.

7. A device for purifying the exhaust gas of an internal combustion engine according to claim 1 or 2, **characterized in that**, only when the engine speed immediately after said fuel-cut order is issued is within a predetermined range, said trapped particulates amount estimation means (20) estimates said amount of trapped particulates.

8. A device for purifying the exhaust gas of an internal combustion engine according to claim 1 or 2, **characterized in that** when a difference between said reference value on the basis of a current engine speed and said amount of fresh intake air becomes larger than a predetermined value, said trapped particulates amount estimation means (20) estimates that a current amount of trapped particulates is an amount of trapped particulates at which said particulate filter (6) should be regenerated.

9. A device for purifying the exhaust gas of an internal combustion engine according to claim 1 or 2, **characterized in that**, when a ratio of said amount of fresh intake air to said reference value on the basis of a current engine speed becomes smaller than a predetermined value, said trapped particulates amount estimation means (20) estimates that a current amount of trapped particulates is an amount of trapped particulates at which said particulate filter (6) should be regenerated.

10. A device for purifying the exhaust gas of an internal combustion engine according to claim 8 or 9, **characterized in that** said predetermined value is varied in accordance with the engine speed.

11. A device for purifying the exhaust gas of an internal combustion engine according to claim 2, **characterized in that**, when said abnormal engine output detection means (S103) detects said abnormal engine output, said throttle valve (4) and said control valve (7a) are fully closed.

12. A device for purifying the exhaust gas of an internal combustion engine according to claim 7, **characterized in that** said device further comprises a regeneration means for regenerating said particulate filter (6), and when said trapped particulates amount estimation means (20) has not estimated said amount of trapped particulates for a set period, said regeneration means regenerates said particulate filter (6) compulsorily.

## Patentansprüche

1. Vorrichtung zum Reinigen des Abgases eines Verbrennungsmotors mit: einem Partikelfilter (6), der in einem Verbrennungsmotorabgassystem (3) angeordnet ist; einer Frischluftansaug-Erfassungseinrichtung (5) zum Erfassen einer Menge von Ansaugfrischluft, die in das Verbrennungsmotoransaugsystem (2) eingeführt wird; einer Drosselventilsteuereinrichtung zum Erhöhen eines Öffnungsgrades eines Drosselventils (4) auf einen festgelegten Öffnungsgrad gemäß einem Kraftstoffabschaltbefehl; und einer Partikeleinfangmenge-Abschätzeinrichtung (20) zum Abschätzen einer Menge von Partikeln, die an dem Partikelfilter (6) eingefangen sind, durch einen Vergleich der Menge von Ansaugfrischluft, die durch die Frischluftansaug-Erfassungseinrichtung (5) erfasst wird, nachdem das Drosselventil (4) zu dem festgelegten Öffnungsgrad durch die Drosselventilsteuereinrichtung gebracht wurde, und einem Referenzwert
**dadurch gekennzeichnet, dass**
die Vorrichtung eine Anormalitäts-Verbrennungsmotorleistungs-Erfassungseinrichtung (S103) hat, um eine anormale Verbrennungsmotorleistung zu Erfassen, bei der die Verbrennungsmotorleistung anormal ansteigt, und wenn die Anormalitäts-Verbrennungsmotorleistungs-Erfassungseinrichtung (S103) die anormale Verbrennungsmotorleistung erfasst, verhindert wird, dass die Drosselventilsteuereinrichtung einen Öffnungsgrad des Drosselventils (4) erhöht.

2. Vorrichtung zum Reinigen des Abgases eines Verbrennungsmotors gemäß Anspruch 1,
**dadurch gekennzeichnet, dass**
die Vorrichtung des weiteren einen Abgasrezirkulationskanal (7) hat, der die stromaufwärtige Seite des Partikelfilters (6) in dem Verbrennungsmotorabgassystem (3) mit der stromabwärtigen Seite des Drosselventils (4) in dem Verbrennungsmotoransaugsystem (2) in Verbindung bringt, und ein Steuerventil (7a) hat, um eine Menge von Abgas, die durch den Abgasrezirkulationskanal (7) rezirkuliert wird, gemäß einem Verbrennungsmotorbetriebszustand auf eine optimale Menge zu steuern, und bei der, wenn die Partikeleinfangmenge-Abschätzeinrichtung (20) die Menge von eingefangenen Partikeln abschätzt, ein Öffnungsgrad des Steuerventils (7a) auf einen eingestellten Öffnungsgrad erhöht wird, bevor die Frischluftansaug-Erfassungseinrichtung (5) die Menge von Ansaugfrischluft erfasst.

3. Vorrichtung zum Reinigen des Abgases eines Verbrennungsmotors gemäß Anspruch 1 oder 2,
**dadurch gekennzeichnet, dass**
die Anormalitäts-Verbrennungsmotorleistungs-Erfassungseinrichtung (S103) die Verbrennung in dem Zylinder, unmittelbar nachdem der Kraftstoffabschaltbefehl ausgegeben wird, als die anormale Verbrennungsmotorleistung erfasst.

4. Vorrichtung zum Reinigen des Abgases eines Verbrennungsmotors gemäß Anspruch 3,
**dadurch gekennzeichnet, dass**
die Vorrichtung des weiteren einen Turbolader (8a, 8b) zum Aufladen der Ansaugluft hat, und die Anormalitäts-Verbrennungsmotorleistungs-Erfassungseinrichtung (S103) die Verbrennung auf der Basis des Ladedrucks des Turboladers (8a, 8b) erfasst.

5. Vorrichtung zum Reinigen des Abgases eines Verbrennungsmotors gemäß Anspruch 3,
**dadurch gekennzeichnet, dass**
die Anormalitäts-Verbrennungsmotorleistungs-Erfassungseinrichtung (S103) die Verbrennung auf der Basis des Drucks in dem Zylinder erfasst.

6. Vorrichtung zum Reinigen des Abgases eines Verbrennungsmotors gemäß Anspruch 3,
**dadurch gekennzeichnet, dass**
die Anormalitäts-Verbrennungsmotorleistungs-Erfassungseinrichtung (S103) die Verbrennung auf der Basis des Abgasdrucks des Gases erfasst, das von dem Zylinder ausgestoßen wird.

7. Vorrichtung zum Reinigen des Abgases eines Verbrennungsmotors gemäß Anspruch 1 oder 2,
**dadurch gekennzeichnet, dass**
lediglich dann, wenn die Verbrennungsmotordrehzahl unmittelbar nach der Ausgabe des Kraftstoffabschaltbefehls in einem vorbestimmten Bereich ist, die Partikeleinfangmenge-Abschätzeinrichtung (20) die Menge von eingefangenen Partikeln abschätzt.

8. Vorrichtung zum Reinigen des Abgases eines Verbrennungsmotors gemäß Anspruch 1 oder 2,
**dadurch gekennzeichnet, dass**
wenn eine Differenz zwischen dem Referenzwert auf der Basis einer derzeitigen Verbrennungsmotordrehzahl und der Menge von Ansaugfrischluft größer als ein vorbestimmter Wert wird, die Partikeleinfangmenge-Abschätzeinrichtung (20) abschätzt, dass eine derzeitige Menge von eingefangenen Partikeln eine Menge von eingefangenen Partikeln ist, bei der der Partikelfilter (6) regeneriert werden soll.

9. Vorrichtung zum Reinigen des Abgases eines Verbrennungsmotors gemäß Anspruch 1 oder 2,
**dadurch gekennzeichnet, dass**
wenn ein Verhältnis der Menge von Ansaugfrischluft zu dem Referenzwert auf der Basis einer derzeitigen Verbrennungsmotordrehzahl kleiner als ein vorbestimmter Wert wird, die Partikeleinfangmenge-Abschätzeinrichtung (20) abschätzt, dass eine derzeitige Menge von eingefangenen Partikeln eine Menge von eingefangenen Partikeln ist, bei der der Partikelfilter (6) regeneriert werden soll.

10. Vorrichtung zum Reinigen des Abgases eines Verbrennungsmotors gemäß Anspruch 8 oder 9,
**dadurch gekennzeichnet, dass**
der vorbestimmte Wert gemäß der Verbrennungsmotordrehzahl variiert.

11. Vorrichtung zum Reinigen des Abgases eines Verbrennungsmotors gemäß Anspruch 2,
**dadurch gekennzeichnet, dass**,
wenn die Anormalitäts-Verbrennungsmotorleistungs-Erfassungseinrichtung (S103) die anormale Verbrennungsmotorleistung erfasst, das Drosselventil (4) und das Steuerventil (7a) vollständig geschlossen sind.

12. Vorrichtung zum Reinigen des Abgases eines Verbrennungsmotors gemäß Anspruch 7,
**dadurch gekennzeichnet, dass**
die Vorrichtung des weiteren eine Regenerierungseinrichtung zur Regenerierung des Partikelfilters (6) hat, und wenn die Partikeleinfangmenge-Abschätzeinrichtung (20) die Menge von eingefangenen Partikeln für einen festgesetzten Zeitraum nicht abgeschätzt hat, die Regenerierungseinrichtung den Partikelfilter (6) zwangsweise regeneriert.

## Revendications

1. Dispositif de purification des gaz d'échappement d'un moteur à combustion interne comprenant : un filtre particulaire (6) disposé dans le système d'échappement du moteur (3) ; un moyen de détection d'air d'admission frais (5) destiné à détecter une quantité d'air d'admission frais introduit dans le système d'admission du moteur (2) ; un moyen de commande de papillon des gaz destiné à augmenter un degré d'ouverture du papillon des gaz (4) à un degré d'ouverture établi conformément à un ordre de coupure de carburant ; et un moyen d'estimation de quantité de matières particulaires piégées (20) destiné à estimer une quantité de matières particulaires piégées sur ledit filtre particulaire (6) par comparaison de ladite quantité d'air d'admission frais détectée par ledit moyen de détection d'air d'admission frais (5) après que ledit papillon des gaz (4) ait été amené audit degré d'ouverture par ledit moyen de commande de papillon des gaz et d'une valeur de référence,
**caractérisé en ce que**
ledit dispositif comprend un moyen de détection de sortie de moteur anormale (S103) destiné à détecter une sortie de moteur anormale dans lequel la sortie du moteur augmente de manière anormale, et lorsque le ledit moyen de détection de sortie de moteur anormale (S103) détecte ladite sortie de moteur anormale, il est empêché que ledit moyen de commande de papillon des gaz augmente un degré d'ouverture dudit papillon des gaz (4).

2. Dispositif de purification des gaz d'échappement d'un moteur à combustion interne selon la revendication 1, **caractérisé en ce que** ledit dispositif comprend de plus un passage de recirculation des gaz d'échappement (7) faisant communiquer le côté amont dudit filtre particulaire (6) dans ledit système d'échappement du moteur (3) avec le côté aval dudit papillon des gaz (4) dans ledit système d'admission du moteur (2), et une soupape de commande (7a) destinée à commander une quantité de gaz d'échappement mis à recirculer à travers ledit passage de recirculation des gaz d'échappement (7) à une quantité optimale conformément à une condition de fonctionnement du moteur, et lorsque ledit moyen d'estimation de quantité de matières particulaires piégées (20) estime ladite quantité de matières particulaires piégées, un degré d'ouverture de ladite soupape de commande (7a) est augmenté à un degré d'ouverture établi avant que ledit moyen de détection d'air d'admission frais (5) détecte ladite quantité d'air d'admission frais.

3. Dispositif de purification des gaz d'échappement d'un moteur à combustion interne selon la revendication 1 ou 2, **caractérisé en ce que** ledit moyen de détection de sortie de moteur anormale (S103) détecte une combustion dans le cylindre, immédiatement après que ledit ordre de coupure de carburant ait été délivré, en tant que dite sortie de moteur anormale.

4. Dispositif de purification des gaz d'échappement d'un moteur à combustion interne selon la revendication 3, **caractérisé en ce que** ledit dispositif comprend de plus un turbocompresseur (8a, 8b) destiné à augmenter l'air d'admission, et ledit moyen de détection de sortie de moteur anormale (S103) détecte ladite combustion sur la base de la pression de suralimentation dudit turbocompresseur (8a, 8b).

5. Dispositif de purification des gaz d'échappement d'un moteur à combustion interne selon la revendication 3, **caractérisé en ce que** ledit moyen de détection de sortie de moteur anormale (S103) détecte ladite combustion sur la base de la pression dans ledit cylindre.

6. Dispositif de purification des gaz d'échappement d'un moteur à combustion interne selon la revendication 3, **caractérisé en ce que** ledit moyen de détection de sortie de moteur anormale (S103) détecte ladite combustion sur la base de la pression d'échappement des gaz évacués dudit cylindre.

7. Dispositif de purification des gaz d'échappement d'un moteur à combustion interne selon la revendication 1 ou 2, **caractérisé en ce que**, seulement lorsque la vitesse du moteur immédiatement après que ledit ordre de coupure de carburant ait été délivré se situe à l'intérieur d'une plage prédéterminée, ledit moyen d'estimation de quantité de matières particulaires piégées (20) estime ladite quantité de matières particulaires piégées.

8. Dispositif de purification des gaz d'échappement d'un moteur à combustion interne selon la revendication 1 ou 2, **caractérisé en ce que** lorsqu'une différence entre ladite valeur de référence sur la base de la vitesse actuelle du moteur et ladite quantité d'air d'admission frais devient supérieure à une valeur prédéterminée, ledit moyen d'estimation de quantité de matières particulaires piégées (20) estime qu'une quantité actuelle de matières particulaires piégées est une quantité de matières particulaires piégées à laquelle ledit filtre particulaire (6) devrait être régénéré.

9. Dispositif de purification des gaz d'échappement d'un moteur à combustion interne selon la revendication 1 ou 2, **caractérisé en ce que**, lorsqu'un rapport de ladite quantité d'air d'admission frais par rapport à ladite valeur de référence sur la base d'une vitesse actuelle du moteur devient inférieur à une valeur prédéterminée, ledit moyen d'estimation de quantité de matières particulaires piégées (20) estime qu'une quantité actuelle de matières particulaires piégées est une quantité de matières particulaires piégées à laquelle ledit filtre particulaire (6) devrait être régénéré.

10. Dispositif de purification des gaz d'échappement d'un moteur à combustion interne selon la revendication 8 ou 9, **caractérisé en ce que** ladite valeur prédéterminée varie conformément à la vitesse du moteur.

11. Dispositif de purification des gaz d'échappement d'un moteur à combustion interne selon la revendication 2, **caractérisé en ce que**, lorsque ledit moyen de détection de sortie de moteur anormale (S103) détecte ladite sortie de moteur anormale, ledit papillon des gaz (4) et ladite soupape de commande (7a) sont entièrement fermés.

12. Dispositif de purification des gaz d'échappement d'un moteur à combustion interne selon la revendication 7, **caractérisé en ce que** ledit dispositif comprend de plus un moyen de régénération destiné à régénérer ledit filtre particulaire (6), et lorsque ledit moyen d'estimation de quantité de matières particulaires piégées (20) n'a pas estimé ladite quantité de matières particulaires piégées pendant une période établie, ledit moyen de régénération régénère obligatoirement ledit filtre particulaire (6).
